# EUROPÄISCHE PATENTSCHRIFT

(11) **EP 1 400 295 B1**
(45) Veröffentlichungstag und Bekanntmachung des Hinweises auf die Patenterteilung: **29.09.2010**
(21) Anmeldenummer: 03013608.9
(22) Anmeldetag: 16.06.2003
(51) Int. Cl.: B23B 45/00, B25H 1/00, B23B 51/04, B23Q 9/00, B23Q 9/02

(54) **Werkzeugmaschinensystem**
Machine tool system
Système de machine-outil

(30) Priorität: 20.09.2002 DE 10243724
(43) Veröffentlichungstag der Anmeldung: 24.03.2004
(73) Patentinhaber: ROBERT BOSCH GMBH, 70442 Stuttgart (DE)
(72) Erfinder: Fuchs, Rudolf, 73765 Neuhausen (DE)
(74) Vertreter: Daub, Thomas

(56) Entgegenhaltungen:
- US-A- 4 422 812
- US-A- 4 676 701
- US-A- 4 936 720
- PATENT ABSTRACTS OF JAPAN vol. 014, no. 193 (M-0963), 19. April 1990 (1990-04-19) & JP 02 036008 A (MITSUBISHI ELECTRIC CORP), 6. Februar 1990 (1990-02-06)

## Beschreibung

### Stand der Technik

Die Erfindung geht aus von einer Werkzeugmaschine nach dem Oberbegriff des Anspruchs 1.

Es ist bekannt, beim Bohren mit Bohrkronen Bohrsysteme mit einem Bohrständer zu verwenden, um an den Werkzeugen hohe Anpressdrücke zu erreichen und um die Werkzeugmaschinen exakt führen zu können. Ferner wird mit dem Bohrständer eine Handhabung der Werkzeugmaschine verbessert, insbesondere dann, wenn in harten Werkstücken oder mit Bohrkronen, die einen großen Durchmesser aufweisen, gebohrt wird. Der Bohrständer weist hierbei eine Grundplatte auf, über die der Bohrständer am zu bearbeitenden Werkstück verankert wird. Über eine Aufnahmeeinheit wird anschließend ein Gehäuse der Werkzeugmaschine am Bohrständer montiert. Die Aufnahmeeinheit umschließt hierbei zumindest teilweise einen Teil des Gehäuses der Werkzeugmaschine. Eine solche Vorrichtung ist beispielsweise aus der US 4,936,720 bekannt.

Aus der US 4,676,701 ist eine Bohrmaschine mit einem Bohrkranz und einem Halter bekannt, bei der der Halter einen vom Bohrkranz ausgebohrten Kern am Bohrkranz hält und so ein Herabfallen des Kerns verhindert. Aus der US 4,422,812 ist ein Bohraufsatz zum Bohren von Löchern in ein Rohr bekannt, bei dem das Rohr durch eine Rohrschelle am Bohraufsatz festgehalten ist.

### Vorteile der Erfindung

Die Erfindung schlägt eine Werkzeugmaschine mit dem Merkmalen des Anspruchs 1 vor.

Es wird vorgeschlagen, dass die Verankerungsvorrichtung zumindest teilweise innerhalb des Gehäuses positioniert ist und das Werkzeug relativ zur Verankerungsvorrichtung rotierbar ist. Hierdurch kann ein kompaktes Werkzeugmaschinensystem erreicht werden. Außerdem kann durch eine Anordnung der Verankerungsvorrichtung zumindest teilweise innerhalb des Wirkbereichs des Werkzeugs einem Verkanten des Werkzeugs im Werkstück entgegengewirkt werden. Hierdurch ist eine einfache und exakte Führung des Werkzeugs erreichbar. Als weiterer Vorteil der Erfindung sind bei einer Anordnung der Verankerungsvorrichtung zumindest teilweise innerhalb des Wirkbereichs des

Werkzeugs zusätzliche Verankerungspunkte außerhalb des Wirkbereichs des Werkzeugs vermeidbar. Es können dadurch Kosten, insbesondere Kosten zum Einbringen von zusätzlichen Verankerungspunkten und derer Beseitigung nach vollendeter Arbeit, eingespart werden. Ferner kann durch die Verwendung eines einzelnen Verankerungspunkts innerhalb des Wirkbereichs des Werkzeugs eine kurze Rüstzeit und somit eine Reduzierung von Arbeitskosten erreicht werden.

Die Verankerungsvorrichtung ist zur Verankerung der Werkzeugmaschine am und/oder im zu bearbeitenden Werkstück vorgesehen. Sie ist hierbei innerhalb des Wirkbereichs des Werkzeugs angeordnet. Unter dem Wirkbereich des Werkzeugs wird im Folgenden der Bereich verstanden, den das Werkzeug, ohne dass das Werkzeugmaschinensystem dabei versetzt werden müsste, während einer Bearbeitung eines Werkstücks umschließt oder umfährt oder - ohne ein vorhandenes Werkstück - der Bereich, den das Werkzeug umschließen oder umfahren kann. Bei einer Bohrkrone beispielsweise ist der Wirkbereich der Bereich, den die Bohrkrone umschließt. Bei einem Einfahren der Bohrkrone in ein Werkstück ist der Wirkbereich der Bohrkrone der Bereich, der vom in das Werkstück von der Bohrkrone eingebrachten Schlitz zumindest in zwei Dimensionen umschlossen ist. Bei einem Fräser ist der Wirkbereich derjenige Bereich, den der Fräser ohne eine Versetzung des Werkzeugmaschinensystems umfahren kann.

Sind die Verankerungsvorrichtung und das Werkzeug zueinander konzentrisch angeordnet, kann eine Kraft, die zum Erreichen eines Bohrvorschubs benötigt wird, vorteilhaft über die im Bohrzentrum verankerte Verankerungsvorrichtung auf das zu bearbeitende Werkstück wirken. Ein Hebelarm zwischen dem Verankerungspunkt und dem Werkzeug und eine daraus resultierende Hebelwirkung ist dadurch vorteilhaft vermeidbar. Es ist eine gleichmäßige Belastung des Werkzeugs und ein gleichmäßiger Anpressdruck erreichbar. Das Werkzeug kann somit gleichmäßig in das zu bearbeitende Werkstück eindringen.

Weist die Verankerungsvorrichtung eine Verankerungseinheit zum Verspannen in oder an einem Werkstück auf, kann die Verankerungsvorrichtung sicher kraft- und/oder formschlüssig mit dem Werkstück verbunden werden. Die Verankerungseinheit kann hierbei von verschiedenen Mechanismen gebildet sein, wie beispielsweise von einem wie ein Dübel - z.B. Kippdübel, ein Klapp- oder Spreizdübel - wirkenden Mechanismus. Der Mechanismus kann jedoch auch von einer anderen, dem Fachmann als sinnvoll erscheinenden Art sein. Vorteilhaft stützt sich die Verankerungsvorrichtung durch die Verankerungseinheit innerhalb des Werkstücks über eine Bohrwand einer Bohrung ab. Denkbar ist jedoch auch, dass sich die Verankerungsvorrichtung bei einem durchbohrten Werkstück über die Verankerungseinheit an einer Außenseite des Werkstücks abstützt.

Ist das Werkzeug bezüglich der Verankerungsvorrichtung rotierbar und/oder weist das Werkzeug eine Bohrkrone auf, kann die Verankerungsvorrichtung konstruktiv einfach innerhalb des Wirkbereichs des Werkzeugs angeordnet werden.

In einer weiteren Ausgestaltung der Erfindung wird vorgeschlagen, dass das Werkzeug entlang der Verankerungsvorrichtung führbar ist. Vorteilhaft ist die Verankerungsvorrichtung zur sicheren und exakten Führung des Werkzeugs im zu bearbeitenden Werkstück nutzbar. Vorhandene Bauteile können gemeinsam genutzt und Kosten, insbesondere Produktionskosten, können reduziert und der Komfort für einen Bediener bei einer Anwendung kann erhöht werden.

Besonders vorteilhaft ist die Verankerungsvorrichtung zumindest teilweise von der Werkzeugmaschine umschlossen. Es ist eine besonders kompakte, geschlossene Bauweise und eine einfache Handhabung der Verankerungsvorrichtung erreichbar. Ferner können Bauteile, die miteinander korrespondieren, vorteilhaft gegen Verschmutzung geschützt werden.

Des Weiteren wird vorgeschlagen, dass die Verankerungsvorrichtung ein Zahnstangengetriebe aufweist, über das ein Vorschub erreichbar ist. Konstruktiv einfach kann über das Zahnstangengetriebe der Verankerungsvorrichtung ein Anpressdruck auf das Werkzeug aufgebracht werden. Der Anpressdruck kann hierbei manuell über einen Hebel, über elektronische, pneumatische, hydraulische oder über andere, dem Fachmann als sinnvoll erscheinende Stellelemente erfolgen.

Zum besseren Verständnis wird außerdem eine Verankerungsvorrichtung zum Verankern einer Werkzeugmaschine beschrieben. Es wird vorgeschlagen, dass die Verankerungsvorrichtung eine Verankerungseinheit aufweist, die innerhalb des Wirkbereichs eines Werkzeugs positionierbar ist. Eine solche Verankerungsvorrichtung zum Verankern der Werkzeugmaschine an oder in dem zu bearbeitenden Werkstück erlaubt eine kompakte Bauweise des Werkzeugmaschinensystems. Außerdem können zusätzliche Verankerungspunkte außerhalb des Wirkbereichs des Werkzeugs vorteilhaft vermieden werden. Dadurch sind Kosten, insbesondere Kosten zur Beseitigung der zusätzlichen Verankerungspunkte, vorteilhaft vermeidbar.

Weist die Verankerungseinheit zumindest ein Spannelement auf, kann die Verankerungsvorrichtung über die Verankerungseinheit konstruktiv einfach lösbar mit dem Werkstück verbunden werden. Die Verankerungseinheit kann auch andere Elemente zum Verankern der Verankerungsvorrichtung aufweisen, die der Fachmann als sinnvoll erachtet, wie z.B. Klemmelemente, Spreizelemente, die sich entgegen einer Belastungsrichtung aufspreizen usw.

Die Verankerungseinheit der Verankerungsvorrichtung kann von einem Grundkörper der Verankerungsvorrichtung lösbar oder mit diesem fest verbunden ausgestaltet sein. Ist die Verankerungseinheit lösbar mit dem Grundkörper ausgestaltet, kann die Verankerungseinheit schnell und sicher mit dem Werkstück verspannt werden und es ist eine einfache Handhabung beim Anbringen der Verankerungseinheit erreichbar.

Bezüglich der Werkzeugmaschine wird ausgegangen von einer Werkzeugmaschine mit einem Elektromotor zum Antrieb eines Werkzeugs, einem den Elektromotor umschließenden Gehäuse, einer zumindest teilweise innerhalb des Gehäuses positionierten Verankerungsvorrichtung zur Verankerung der Werkzeugmaschine an einem Werkstück und einer vom Gehäuse umschlossenen Aufnahmeeinheit zur Aufnahme der Verankerungsvorrichtung. Es wird vorgeschlagen, dass die Werkzeugmaschine eine zumindest teilweise vom Gehäuse umschlossene Vorschubeinrichtung zum Aufbringen einer Zugkraft auf die Verankerungsvorrichtung aufweist. Es ist ein kompaktes Werkzeugmaschinensystem erreichbar, deren korrespondierende Teile im Gehäuse der Werkzeugmaschine vor Staub und Beschädigung geschützt sind.

Umfasst die Werkzeugmaschine eine vom Gehäuse umschlossene Aufnahmeeinheit zur Aufnahme der Verankerungsvorrichtung, kann eine separate Aufnahmeeinheit, die sich an einer
Außenseite des Gehäuses befindet, vorteilhaft vermieden werden und es ist ein kompaktes Werkzeugmaschinensystem erreichbar.

Vorteilhaft umschließt das Gehäuse zumindest teilweise eine Vorschubeinrichtung zum Aufbringen einer Zugkraft auf die
Verankerungsvorrichtung. Bereits vorhandene Bauteile können vorteilhaft genutzt und Kosten, insbesondere Produktionskosten, Gewicht sowie Bauraum können eingespart werden.

Ist die Vorschubeinrichtung mit einem Werkzeugantrieb verbindbar, sind bereits vorhandene Bauteile vorteilhaft nutzbar und Gewicht sowie Bauraum können eingespart werden. Ferner kann ein Arbeitsablauf, insbesondere beim Bohren im Werkstück, zumindest teilweise automatisiert werden, was einen Bedienkomfort erhöht.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teilschnitt durch ein schematisch dargestelltes Bohrsystem in einer Seitenansicht und
- Fig. 2: eine Seitenansicht einer Werkzeugmaschine mit einer Vorschubeinrichtung.

### Beschreibung des Ausführungsbeispiels

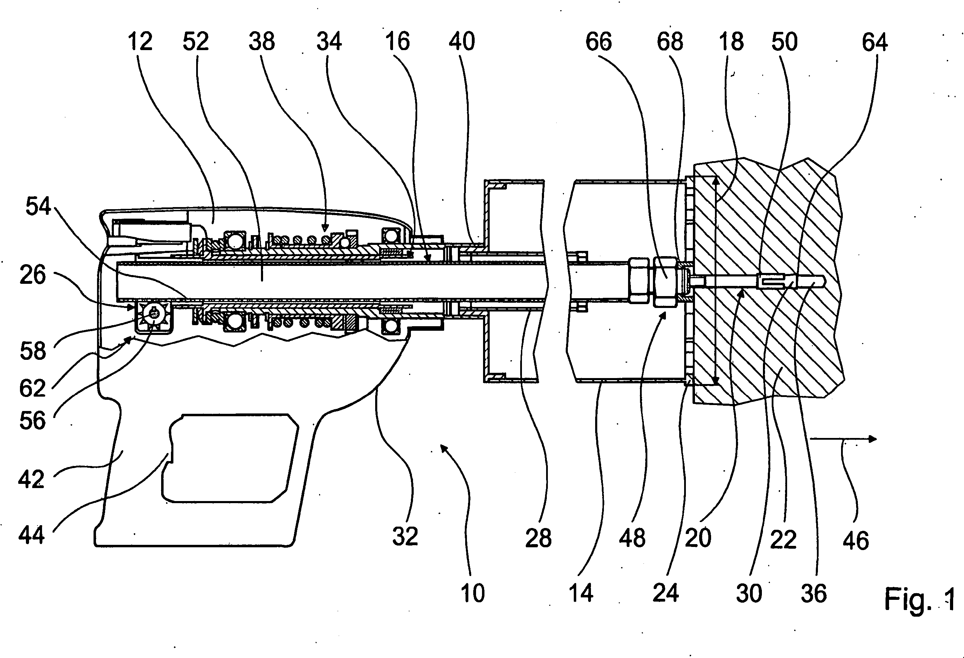

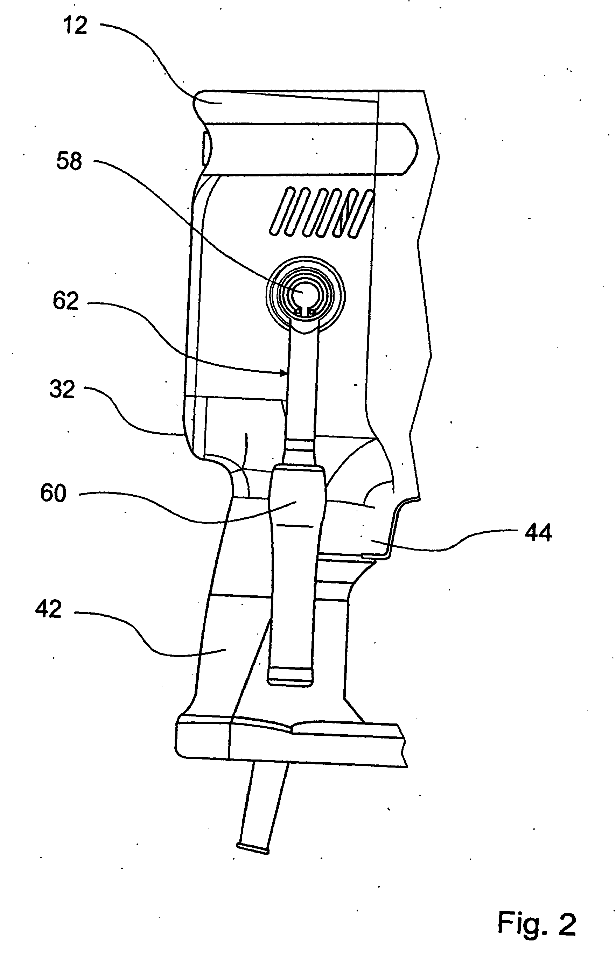

Fig. 1 und Fig. 2 zeigen ein Bohrsystem 10 mit einer Werkzeugmaschine 12, einem Werkzeug 14 und mit einer Verankerungsvorrichtung 16 zur Verankerung der Werkzeugmaschine 12 in einem Werkstück 22. Die Verankerungsvorrichtung 16 ist hierbei teilweise innerhalb des Wirkbereichs 18 des Werkzeugs 14 angeordnet.

Die von einem Bohrhammer gebildete Werkzeugmaschine 12 mit ihrem Gehäuse 32 umfasst einen nicht näher dargestellten Elektromotor, ein Getriebe und ein Schlagwerk 38. Über das Schlagwerk 38 ist das in einer Werkzeughalterung 40 eingespannte Werkzeug 14 drehend und schlagend antreibbar. Auf einer dem Werkzeug 14 abgewandten Seite des Gehäuses 32 sind ein Handgriff 42 und ein Betätigungsschalter 44 angeordnet.

Die Verankerungsvorrichtung 16, die mit dem Werkzeug 14, das eine Bohrkrone 24 aufweist, konzentrisch angeordnet ist, umfasst an ihrem ersten in Bearbeitungsrichtung 46 weisenden Ende eine Verankerungseinheit 20. Die Verankerungsvorrichtung 16 ist durch die Verankerungseinheit 20 mit dem Werkstück 22 verspannbar. Zum Verspannen der Verankerungsvorrichtung 16 umfasst die Verankerungseinheit 20 ein Spannelement 30, mit dem ein von einem Dübel gebildetes Spreizelement 50 aufgeweitet wird. Durch das Aufspreizen des Spreizelements 50 wird die Verankerungsvorrichtung 16 mit dem Werkstück 22 verspannt. Hierzu wird zum Aufweiten des Spreizelements 50 das konisch ausgebildete Spannelement 30, dessen breiter Teil 64 in die Bearbeitungsrichtung 46 weist, durch einen Spannmechanismus 48 entgegen der Bearbeitungsrichtung 46 in das Spreizelement 50 gezogen. Der Spannmechanismus 48 umfasst hierbei eine Mutter 66, die sich über ein Teil 68 am Werkstück 22 abstützt. Durch Drehen der Mutter 66 wird über ein nicht näher dargestelltes Gewinde das Spannelement 30 entgegen der Bearbeitungsrichtung 46 in das Spreizelement 50 gezogen.

Mit seinem zweiten, entgegen der Bearbeitungsrichtung 46 weisenden Ende ragt die Verankerungsvorrichtung 16 durch die Werkzeugaufnahme 40 in das Gehäuse 32 der Werkzeugmaschine 12 und wird dort vom Gehäuse 32 umschlossen. Im Gehäuse 32 weist die Werkzeugmaschine 12 eine Aufnahmeeinheit 34 zur Aufnahme der Verankerungsvorrichtung 16 auf. Das in das Gehäuse 32 ragende, von einem Rohr gebildete Teil 52 der Verankerungsvorrichtung 16 weist an seiner zum Handgriff 42 weisenden Seite eine Verzahnung 54 auf, die einen Teil eines Zahnstangengetriebes 26 bildet. Zur Bildung der Verzahnung 54 sind Ausnehmungen in das Teil 52 eingebracht, so dass eine besonders kostengünstige und platzsparende Verzahnung 54 erreicht wird. Die Aufnahmeeinheit 34 umfasst weiter ein von einem Zahnrad gebildetes Element 56 einer Vorschubeinrichtung 62, das formschlüssig in die Verzahnung 54 eingreift.

Die Vorschubeinrichtung 62 umfasst einen Hebel 60, der sich an einer Außenseite des Gehäuses 32 befindet. Der Hebel 60 ist über eine Welle 58 mit dem Element 56 verbunden. Mit dem Hebel 60 ist beim Bohren im Werkstück 22 über die Verankerungsvorrichtung 16 manuell ein Vorschub der Werkzeugmaschine 12 durch einen Bediener erreichbar. Ferner ist die Werkzeugmaschine 12 über die Verankerungsvorrichtung 16 beim Bohren in und entgegen der Bearbeitungsrichtung 46 führbar.

Zum Verankern der Werkzeugmaschine 12 im Werkstück 22 wird in einem ersten Arbeitsschritt eine Bohrung 36 in das Werkstück 22 eingebracht. Anschließend wird die Verankerungseinheit 20 der Verankerungsvorrichtung 16 in die Bohrung 36 eingeführt, bis das Teil 68 des Spannmechanismus 48 mit dem Werkstück 22 in Anlage kommt. Durch Drehen der Mutter 66 mit einem geeigneten, nicht näher dargestellten Werkzeug wird das Spannelement 30 entgegen der Bearbeitungsrichtung 46 in Richtung des Spreizelements 50 bewegt. Durch Aufspreizen des Spreizelements 50 wird die Verankerungsvorrichtung 16 mit dem Werkstück 22 verspannt.

Zur Aufnahme der innerhalb des Wirkbereichs 18 des Werkzeugs 14 positionierbaren Verankerungsvorrichtung 16 in der Werkzeugmaschine 12 wird die Verankerungsvorrichtung 16 durch eine im Werkzeug 14 befindliche Führung 28 und durch das in der Werkzeugaufnahme 40 befindliche Werkzeug 14 in die Aufnahmeeinheit 34 im Gehäuse 32 der Werkzeugmaschine 12 eingeschoben und innerhalb des Gehäuses 32 positioniert. Beim Erreichen einer Betriebsposition der Verankerungsvorrichtung 16 im Gehäuse 32 kommt das Element 56 mit der Verzahnung 54 der Verankerungsvorrichtung 16 in Wirkverbindung, die somit einen Teil der Vorschubeinrichtung 62 bilden.

Beim Bohren rotiert das Werkzeug 14 bezüglich der Verankerungsvorrichtung 16. Durch Betätigen des Hebels 60 der Vorschubeinrichtung 62 in Bearbeitungsrichtung 46 durch den Bediener wird das Gehäuse 32 über die Verankerungsvorrichtung 16 in Bearbeitungsrichtung 46 bewegt und es wird ein Vorschub erreicht.

### Bezugszeichen

- 10: Bohrsystem
- 12: Werkzeugmaschine
- 14: Werkzeug
- 16: Verankerungsvorrichtung
- 18: Wirkbereich
- 20: Verankerungseinheit
- 22: Werkstück
- 24: Bohrkrone
- 26: Zahnstangengetriebe
- 28: Führung
- 30: Spannelement
- 32: Gehäuse
- 34: Aufnahmeeinheit
- 36: Bohrung
- 38: Schlagwerk
- 40: Werkzeughalterung
- 42: Handgriff
- 44: Betätigungsschalter
- 46: Bearbeitungsrichtung
- 48: Spannmechanismus
- 50: Spreizelement
- 52: Teil
- 54: Verzahnung
- 56: Element
- 58: Welle
- 60: Hebel
- 62: Vorschubeinrichtung
- 64: Teil
- 66: Mutter
- 68: Teil

## Patentansprüche

1. Werkzeugmaschine (12) zum Bohren mit einem Elektromotor zum Antrieb eines Werkzeugs (14), einem den Elektromotor umschließenden Gehäuse (32), einer zumindest teilweise innerhalb des Gehäuses (32) positionierten Verankerungsvorrichtung (16) zur Verankerung der Werkzeugmaschine (12) an einem Werkstück (22) und einer vom Gehäuse (32) umschlossenen Aufnahmeeinheit (34) zur Aufnahme der Verankerungsvorrichtung (16), **gekennzeichnet durch** eine zumindest teilweise vom Gehäuse (32) umschlossene Vorschubeinrichtung (62) zum Aufbringen einer Zugkraft auf die Verankerungsvorrichtung (16).

2. Werkzeugmaschine nach Anspruch 1, **dadurch gekennzeichnet, dass** die Vorschubeinrichtung mit einem Werkzeugantrieb verbindbar ist.

3. Bohrsystem (10) mit einer Werkzeugmaschine (12) nach Anspruch 1 umfassend einen Elektromotor zum Antrieb eines Werkzeugs (14) und ein den Elektromotor umschließendes Gehäuse (32), einem Werkzeug (14) und mit einer Verankerungsvorrichtung (16) zur Verankerung der Werkzeugmaschine (12), wobei die verankerungsvorrichtung (16) zumindest teilweise innerhalb des Wirkbereichs (18) des Werkzeugs (14) angeordnet ist, **dadurch gekennzeichnet, dass** das Werkzeug bezüglich zur Verankerungsvorrichtung rotierbar ist.

4. Bohrsystem nach Anspruch 3, **dadurch gekennzeichnet, dass** die Verankerungsvorrichtung (16) und das Werkzeug (14) zueinander konzentrisch angeordnet sind.

5. Bohrsystem nach Anspruch 3 oder 4, **dadurch gekennzeichnet, dass** die Verankerungsvorrichtung (16) eine Verankerungseinheit (20) zum Verspannen in oder an einem Werkstück (22) aufweist.

6. Bohrsystem nach einem der vorhergehenden Ansprüche, **dadurch gekennzeichnet, dass** das Werkzeug (14) eine Bohrkrone (24) aufweist.

7. Bohrsystem nach einem der vorhergehenden Ansprüche, **dadurch gekennzeichnet, dass** das Werkzeug (14) entlang der Verankerungsvorrichtung (16) führbar ist.

8. Bohrsystem nach einem der vorhergehenden Ansprüche, **dadurch gekennzeichnet, dass** die Verankerungsvorrichtung (16) zumindest teilweise von der Werkzeugmaschine (12) umschlossen ist.

9. Bohrsystem nach Anspruch 8, **dadurch gekennzeichnet, dass** die Verankerungsvorrichtung (16) ein Zahnstangengetriebe (26) aufweist, über das ein vorschub erreichbar ist.

## Claims

1. Power tool (12) for drilling, comprising an electric motor for driving a tool (14), a housing (32) enclosing the electric motor, an anchoring device (16) positioned at least partly inside the housing (32) for anchoring the power tool (12) on a workpiece (22), and an accommodating unit (34) enclosed by the housing (32) for accommodating the anchoring device (16), **characterized by** a feed device (62) at least partly enclosed by the housing (32) for applying a pulling force to the anchoring device (16).

2. Power tool according to Claim 1, **characterized in that** the feed device can be connected to a tool drive.

3. Drilling system (10) having a power tool (12) according to Claim 1, comprising an electric motor for driving a tool (14) and a housing (32) enclosing the electric motor, a tool (14), and an anchoring device (16) for anchoring the power tool (12), wherein the anchoring device (16) is arranged at least partly within the effective region (18) of the tool (14), **characterized in that** the tool can be rotated relative to the anchoring device.

4. Drilling system according to Claim 3, **characterized in that** the anchoring device (16) and the tool (14) are arranged concentrically to one another.

5. Drilling system according to Claim 3 or 4, **characterized in that** the anchoring device (16) has an anchoring unit (20) for restraining in or on a workpiece (22).

6. Drilling system according to one of the preceding claims, **characterized in that** the tool (14) has a core cutter (24).

7. Drilling system according to one of the preceding claims, **characterized in that** the tool (14) can be guided along the anchoring device (16).

8. Drilling system according to one of the preceding claims, **characterized in that** the anchoring device (16) is at least partly enclosed by the power tool (12).

9. Drilling system according to Claim 8, **characterized in that** the anchoring device (16) has a rack gearing (26) via which a feed can be achieved.

## Revendications

1. Machine-outil (12) de perçage comprenant un moteur électrique pour l'entraînement d'un outil (14), un boîtier (32) entourant le moteur électrique, un dispositif d'ancrage (16) positionné au moins en partie à l'intérieur du boîtier (32) pour l'ancrage de la machine-outil (12) à une pièce (22) et une unité de réception (34) entourée par le boîtier (32) pour recevoir le dispositif d'ancrage (16), **caractérisée par** un dispositif d'avance (62) au moins en partie entouré par le boîtier (32) pour appliquer une force de traction au dispositif d'ancrage (16).

2. Machine-outil selon la revendication 1, **caractérisée en ce que** le dispositif d'avance peut être connecté à un entraînement d'outil.

3. Système de perçage (10) comprenant une machine-outil (12) selon la revendication 1, comprenant un moteur électrique pour l'entraînement d'un outil (14) et un boîtier (32) entourant le moteur électrique, un outil (14) et comprenant un dispositif d'ancrage (16) pour ancrer la machine-outil (12), le dispositif d'ancrage (16) étant disposé au moins en partie à l'intérieur de la zone d'action (18) de l'outil (14), **caractérisé en ce que** l'outil peut tourner par rapport au dispositif d'ancrage.

4. Système de perçage selon la revendication 3, **caractérisé en ce que** le dispositif d'ancrage (16) et l'outil (14) sont disposés concentriquement l'un par rapport à l'autre.

5. Système de perçage selon la revendication 3 ou 4, **caractérisé en ce que** le dispositif d'ancrage (16) présente une unité d'ancrage (20) destinée à être serrée dans ou sur une pièce (22).

6. Système de perçage selon l'une quelconque des revendications précédentes, **caractérisé en ce que** l'outil (14) présente une couronne de fleuret (24).

7. Système de perçage selon l'une quelconque des revendications précédentes, **caractérisé en ce que** l'outil (14) peut être guidé le long du dispositif d'ancrage (16).

8. Système de perçage selon l'une quelconque des revendications précédentes, **caractérisé en ce que** le dispositif d'ancrage (16) est au moins en partie entouré par la machine-outil (12).

9. Système de perçage selon la revendication 8, **caractérisé en ce que** le dispositif d'ancrage (16) présente une transmission à crémaillère (26) par le biais de laquelle on peut effectuer un mouvement d'avance.
